(19)

**Europäisches Patentamt**
**European Patent Office**
**Office européen des brevets**

(11) **EP 4 389 464 A1**

(12) **EUROPEAN PATENT APPLICATION**
published in accordance with Art. 153(4) EPC

(43) Date of publication:
**26.06.2024 Bulletin 2024/26**

(21) Application number: **22858229.2**

(22) Date of filing: **20.07.2022**

(51) International Patent Classification (IPC):
**B60C 19/00** (2006.01)

(52) Cooperative Patent Classification (CPC):
**B60C 19/00**

(86) International application number:
**PCT/JP2022/028169**

(87) International publication number:
**WO 2023/021907 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.08.2021 JP 2021132595**

(71) Applicant: **Sumitomo Rubber Industries, Ltd.**
**Kobe-shi, Hyogo 651-0072 (JP)**

(72) Inventors:
• **TERAMOTO, Masaki**
  **Kobe-shi, Hyogo 651-0072 (JP)**

• **TANIMURA, Kazuharu**
  **Kobe-shi, Hyogo 651-0072 (JP)**
• **HASHIMOTO, Yukinori**
  **Kobe-shi, Hyogo 651-0072 (JP)**
• **NISHIMOTO, Takahiro**
  **Kobe-shi, Hyogo 651-0072 (JP)**
• **YONEDA, Kenji**
  **Kobe-shi, Hyogo 651-0072 (JP)**
• **MAEDA, Yusuke**
  **Kobe-shi, Hyogo 651-0072 (JP)**
• **TAKEDA, Ai**
  **Kobe-shi, Hyogo 651-0072 (JP)**

(74) Representative: **TBK**
**Bavariaring 4-6**
**80336 München (DE)**

(54) **TIRE CONDITION DETERMINATION SYSTEM, TIRE CONDITION DETERMINATION DEVICE, TIRE CONDITION DETERMINATION METHOD, AND PROGRAM**

(57) A tire state determination system (100) according to the present disclosure acquires, from a vehicle (50), state data including various types of information that may exert influence on deterioration of a base body portion of a tire (1) (S104), calculates, based on the acquired state data, an evaluation value S indicating a state of the base body portion of the tire (1) (S105), and determines reusability of the tire (1) based on the evaluation value S (S106).

EP 4 389 464 A1

FIG.7

```
                    ┌─────────────┐
                    │    START    │
                    └──────┬──────┘
                           │
         ┌─────────────────▼──────────────┐ S101
    No   │       DETERMINATION            │
  ◄──────┤         REQUEST?               │
         └─────────────────┬──────────────┘
                        Yes │
         ┌─────────────────▼──────────────┐ S102
    No   │       COMMUNICATION            │
  ◄──────┤        ESTABLISHED?            │
         └─────────────────┬──────────────┘
                        Yes │
              ┌─────────────▼────────────┐ S103
              │     TRANSMIT DATA        │
              │  ACQUISITION REQUEST     │
              └─────────────┬────────────┘
                            │
         ┌─────────────────▼──────────────┐ S104
    No   │        STATE DATA              │
  ◄──────┤        ACQUIRED?               │
         └─────────────────┬──────────────┘
                        Yes │
              ┌─────────────▼────────────┐ S105
              │       CALCULATE          │
              │   EVALUATION VALUE       │
              └─────────────┬────────────┘
```

**S101** DETERMINATION REQUEST? — No / Yes

**S102** COMMUNICATION ESTABLISHED? — No / Yes

**S103** TRANSMIT DATA ACQUISITION REQUEST

**S104** STATE DATA ACQUIRED? — No / Yes

**S105** CALCULATE EVALUATION VALUE

**S106** REUSABLE? — No / Yes

**S107** DETERMINE VALUE OF TIRE

**S1071** DETERMINE TREAD STRUCTURE

**S109** OUTPUT INAPPLICABLE INFORMATION AND EVALUATION VALUE

**S108** OUTPUT PROCESS

**S110** TRANSFER REQUEST? — No / Yes

**S111** TRANSMIT DETERMINATION RESULT AND EVALUATION VALUE TO REQUEST SOURCE

END

7 / 8

**Description**

TECHNICAL FIELD

The present disclosure relates to a tire state determination system capable of determining a state of a base body portion of a non-pneumatic tire that is used for travelling of a vehicle.

BACKGROUND ART

There is known a non-pneumatic tire that does not require air filling (see PTL 1). The non-pneumatic tire, as is the case with a pneumatic tire, includes a tread portion that touches a travel road surface on the ground. The tread portion of the non-pneumatic tire is also called a tread ring. When the tread rubber constituting the tread portion of the non-pneumatic tire wears and the thickness of the tread portion becomes lower than a reference value, the life of the non-pneumatic tire ends.

CITATION LIST

[PATENT LITERATURE]

[PTL 1] Japanese Patent Application Publication No. 2015-217717

SUMMARY OF THE INVENTION

PROBLEMS TO BE SOLVED BY THE INVENTION

Meanwhile, even when the tread portion wears and the life of the non-pneumatic tire ends, the base body portion (a part excluding the tread portion) of the non-pneumatic tire may not have been damaged. In this case, it is possible to reuse the base body portion by retreading the tread portion. However, the non-pneumatic tire began to be implemented in recent years and has not become popular. In addition, the non-pneumatic tire is completely different from a conventional pneumatic tire in structure and material. Accordingly, inspection standards for determining whether or not the base body portion of the non-pneumatic tire is reusable have not been established yet, and thus inspectors cannot perform an accurate inspection. If the non-pneumatic tire were inspected with a conventional inspection method applied to pneumatic tires, an accurate inspection result would not be obtained.

It is therefore an object of the present disclosure to provide a tire state determination system, a tire state determination apparatus, a tire state determination method, and a program that can determine whether or not a non-pneumatic tire in use, or a non-pneumatic tire whose life ended, is reusable as a base portion of a retreaded tire.

SOLUTION TO THE PROBLEMS

A tire state determination system according to an aspect of the present disclosure is configured to determine a state of a non-pneumatic tire that is used for travelling of a vehicle. The tire state determination system includes: an acquisition portion configured to acquire tire-related information that may exert influence on deterioration of a base body portion that is a part of the non-pneumatic tire excluding a tread portion; and a reusability determination portion configured to perform a determination process to determine, based on the tire-related information, whether or not the base body portion is reusable.

With the above-described configuration of the tire state determination system according to the present disclosure, it is possible to determine whether or not a tire is reusable as a retreaded tire even when the tire is a non-pneumatic tire. In addition, when an inspector uses the present system, the inspector can preliminarily obtain a determination result on whether or not it is reusable before the inspector performs a primary inspection such as a visual inspection or a touch inspection, and a secondary inspection such as a high-voltage inspection or a shearography inspection. This makes it possible for the inspector to remove a non-pneumatic tire in a bad state that was determined as not reusable, from the inspection object, thereby reducing the inspection load of the inspector and restricting an inspection cost.

In addition, when an owner of the vehicle uses the present system, the owner can preliminarily grasp the determination result (reusability) of the base body portion of the non-pneumatic tire mounted on the vehicle.

ADVANTAGEOUS EFFECTS OF THE INVENTION

According to the present disclosure, it is possible to determine whether or not a non-pneumatic tire in use, or a non-pneumatic tire whose life ended, is reusable as a base portion of a retreaded tire.

BRIEF DESCRIPTION OF THE DRAWINGS

[FIG. 1] FIG. 1 is a block diagram showing a configuration of a tire state determination system.
[FIG. 2] FIG. 2 is a schematic diagram showing an example of a vehicle.
[FIG. 3] FIG. 3 is a perspective diagram showing a configuration of a tire mounted on the vehicle.
[FIG. 4] FIG. 4 is a cross-sectional diagram of the tire in the axial direction thereof.
[FIG. 5] FIG. 5 is a block diagram showing a configuration of the vehicle.
[FIG. 6] FIG. 6 is a block diagram showing a configuration of a state determination apparatus included in the tire state determination system.
[FIG. 7] FIG. 7 is a flowchart showing an example of a procedure of an applicability determination process executed in the tire state determination system.
[FIG. 8] FIG. 8 is a flowchart showing another example of the procedure of the applicability determination process executed in the tire state determination system.

DESCRIPTION OF EMBODIMENTS

The following describes an embodiment of the present disclosure with reference to the accompanying drawings as necessary. It should be noted that the following embodiment is an example of a specific embodiment of the present disclosure and should not limit the technical scope of the present disclosure.

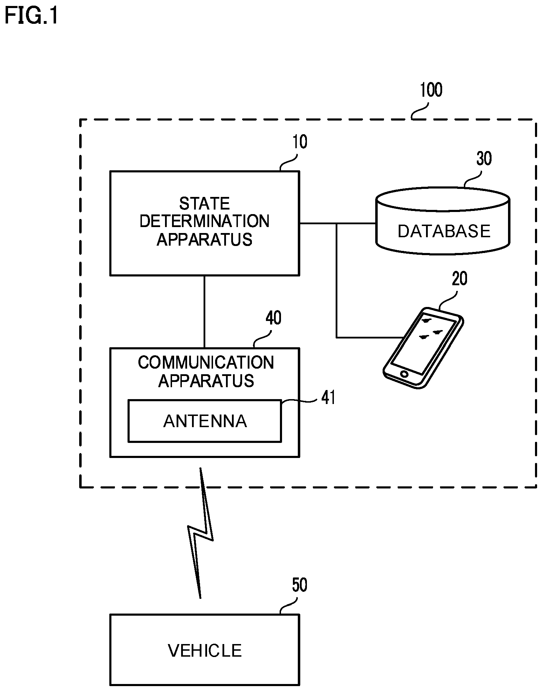

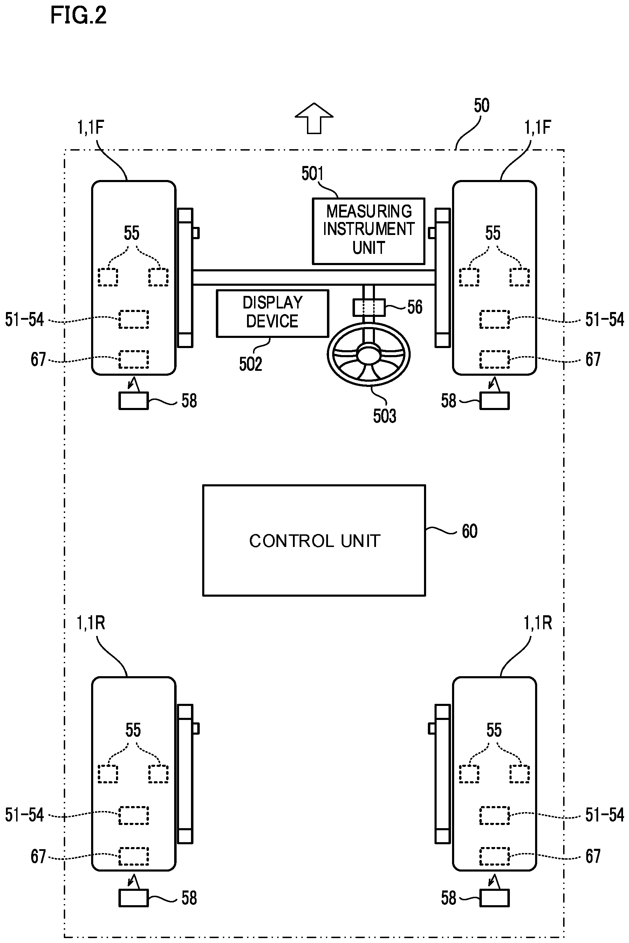

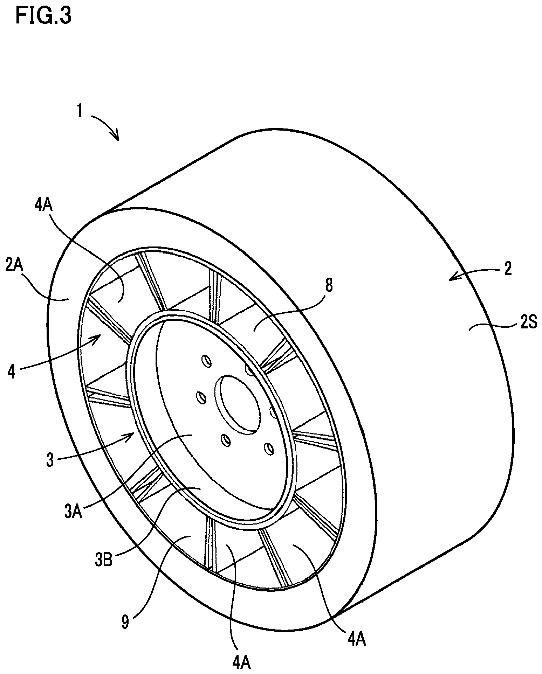

FIG. 1 is a block diagram showing a configuration of a tire state determination system 100 (hereinafter merely referred to as a determination system 100) according to an embodiment of the present disclosure. The determination system 100 is an example of a tire state determination system of the present disclosure, and is configured to determine a state of a base body portion of a tire 1 (see FIG. 2 or FIG. 3) that is used for travelling of a vehicle 50. In the present embodiment, in the determination system 100, it is determined whether or not the base body portion of the tire 1 is reusable as a retreaded tire. That is, the determination system 100 determines whether or not the base body portion of the tire 1 can be used as a base portion (what is called a base tire) of the retreaded tire.

Here, the tire 1 is what is called a non-pneumatic tire whose inside is not filled with compressed air. In addition, the base body portion of the tire 1 is a part of the tire 1 that remains after a tread ring 2 (see FIG. 3) described below is removed from the tire 1, the part being also called a base tire. It is noted that the retreaded tire is a tire that is obtained by replacing the tread ring 2 (a part corresponding to the tread portion of the pneumatic tire) of a non-pneumatic tire whose life ended, with a new tread ring 2 such that the function of the tire is restored.

[Configuration of tire state determination system 100]

As shown in FIG. 1, the determination system 100 includes a state determination apparatus 10 (an example of a tire state determination apparatus of the present disclosure), an information terminal 20, a database 30, and a communication apparatus 40 that are connected with each other by a wired or wireless communication network so as to be communicable with each other. The communication network is, for example, a wired communication network connected by a LAN or the like, or a wireless communication network using a dedicated line, a public line or the like.

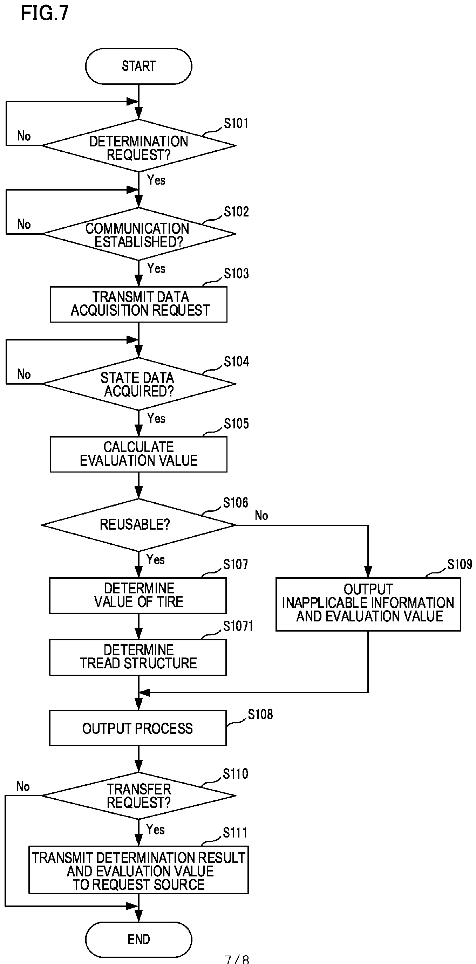

The state determination apparatus 10 is an element constituting the determination system 100. The state determination apparatus 10 executes an applicability determination process (see FIG. 7) described below using: state data (an example of tire-related information of the present disclosure) described below transmitted from the vehicle 50; and a predetermined calculation formula (see formula (1)). This allows the state determination apparatus 10 to determine whether or not the base body portion of the tire 1 is usable as the base portion of the retreaded tire, and outputs the determination result to an external apparatus such as the information terminal 20.

The state determination apparatus 10 is an information processing apparatus or a server apparatus that can execute various calculation processes, and specifically is a computer, such as a server computer, a cloud server, or a personal computer, connected to the communication network. It is noted that the state determination apparatus 10 is not limited to a single computer, but may be a computer system in which a plurality of computers operate in association with each other, or a cloud computing system. In addition, various processes executed by the state determination apparatus 10 may be distributed to and executed by one or more processors. The state determination apparatus 10 is installed with a program or computer software for operating the determination system 100.

The information terminal 20 is an information processing apparatus or a terminal apparatus used by: an owner of the tire 1 that is the determination object; or an inspection executor (inspector) who performs an inspection of the state of the tire 1. The information terminal 20 is what is called a desktop personal computer, a notebook personal computer, or a human-carriable mobile terminal such as a smartphone or a tablet terminal. In addition, the information terminal 20 may be a vehicle-mounted terminal or a display device installed in the vehicle 50. In addition, in a case where the vehicle 50 is what is called a connected car that can function as an ICT terminal, the vehicle 50 itself may be regarded as the information terminal 20.

The information terminal 20 includes a display portion such as a liquid crystal display. Upon receiving a determination result output from the state determination apparatus 10, the information terminal 20 displays the determination result on a display screen of the display portion. Accordingly, the information terminal 20 is installed with a program or computer software for transmitting the various types of information to the state determination apparatus 10 in cooperation with the determination system 100, and displaying the determination result on the display screen.

The database 30 is a storage device, such as an HDD or an SSD, communicably connected with the communication network. The database 30 stores various types of data that are used in the determination system 100. The database 30 is configured as an external apparatus, such as another server apparatus or another storage device, that can perform data communications with the state determination apparatus 10. It is noted that the database 30 may be what is called a cloud storage that is connected via the Internet. In addition, the database 30 may be a storage device installed in the state determination apparatus 10, or an external storage device connected with the state determination apparatus 10 by a local network.

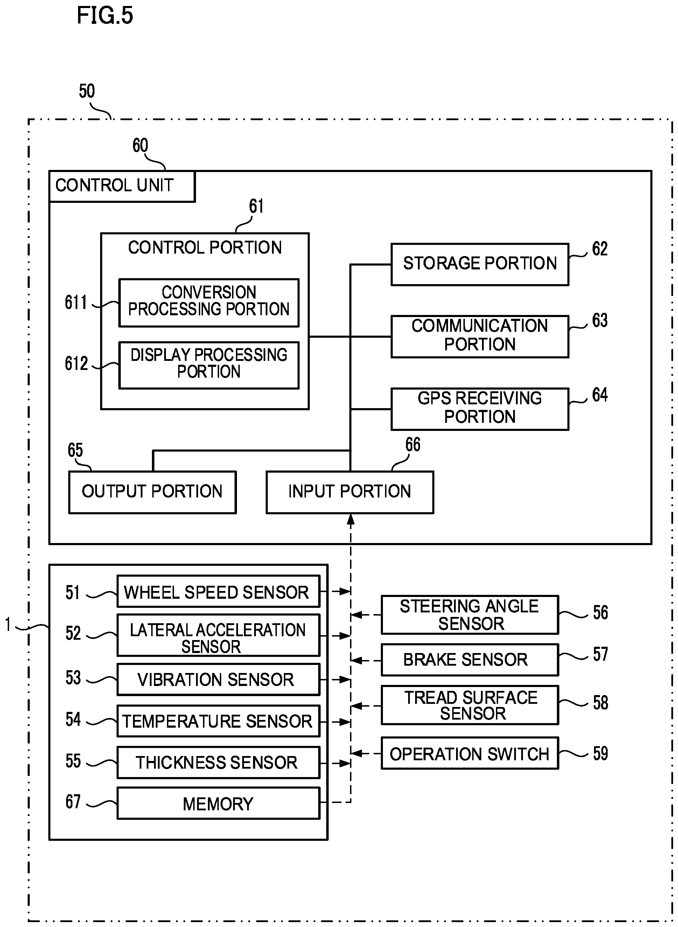

The communication apparatus 40 performs a communication with the vehicle 50 and receives the state data described below output from the vehicle 50. Upon receiving the state data from the vehicle 50, the communication apparatus 40 transmits the received state data to the state determination apparatus 10. The communication apparatus 40 includes an antenna 41. The antenna 41 is used in a wireless communication performed with a communication portion 63 (see FIG. 5) that is included in a control unit 60 of the vehicle 50. When the vehicle 50 has entered a communication range defined by a predetermined wireless communication standard, the communication apparatus 40 can perform a wireless communication with the communication portion 63.

[Vehicle 50]

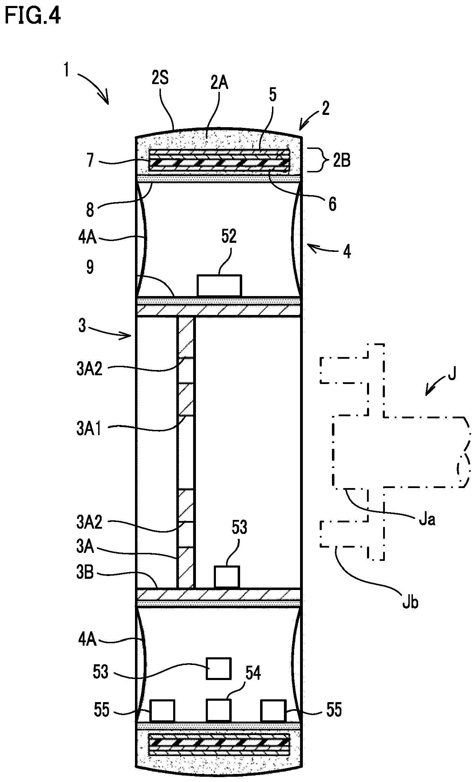

The following describes the vehicle 50 mounted with the tire 1, with reference to FIG. 2 to FIG. 5. Here, FIG. 2 is a schematic diagram showing an example of the vehicle 50. FIG. 3 is a perspective diagram showing a configuration of the tire 1 mounted on the vehicle 50. FIG. 4 is a cross-sectional diagram of the tire 1 in the axial direction thereof. FIG. 5 is a block diagram showing a configuration of the vehicle 50.

As shown in FIG. 2, the vehicle 50 is, for example, a passenger car of the front wheel steering system including a total of four wheels at the front and the rear. The tire 1 is mounted to each wheel of the vehicle 50. In the present embodiment, the vehicle 50 is, for example, a front engine-front drive car (FF car). Tires 1F mounted to the front wheels of the vehicle 50 are driving tires, and tires 1R mounted to the rear wheels are driven tires. It is noted that the driving system and the steering system of the vehicle 50 are not particularly limited. For example, the driving system of the vehicle 50 may be different from that of the FF car, and the steering system of the vehicle 50 may be different from the front wheel steering system.

In addition, the vehicle 50 is not limited to the four-wheel passenger car, but may be a passenger car with any number of wheels other than four, a large-sized vehicle such as a truck or a bus, a motorcycle, a racing vehicle, an industrial vehicle, a special vehicle, or a vehicle for loading such as a trailer or a carriage.

The tire 1 is a non-pneumatic tire that can be used in the above-described various types of vehicles. In the present embodiment, as shown in FIG. 3 and FIG. 4, the tire 1 for a passenger car is described as one example. The tire 1 includes: the tread ring 2 (an example of a tread portion of the present disclosure) of a cylindrical shape including a tread surface 2S that touches the road surface on the ground; a hub portion 3 disposed inside the tread ring 2 in the radial direction thereof; and a spoke portion 4.

The tread ring 2 is a part corresponding to the tread portion of the pneumatic tire, and includes: a tread rubber 2A that forms the tread surface 2S; and a reinforcing cord layer 2B. The reinforcing cord layer 2B is disposed more inside of the tread ring 2 in the radial direction than the tread rubber 2A.

As the tread rubber 2A, a rubber component that is excellent in frictional force to ground contact and in wear resistance is suitable. In addition, various patterns of tread groove (not shown) are formed on the tread surface 2S being a surface portion of the tread rubber 2A.

The reinforcing cord layer 2B is composed of a plurality of layers and includes: an outer breaker 5 disposed outside in the radial direction; an inner breaker 6 disposed inside in the radial direction; and a shear rubber layer 7, formed from a high elastic rubber, disposed between the outer and inner breakers.

The outer breaker 5 is composed of a plurality of (for example, two) outer plies. The outer plies are each a cord layer in which high elastic reinforcing cords such as steel cords are arranged to align in a state of being slanted at an angle in the range of 5 to 85 degrees, preferably 10 to 35 degrees, with respect to the tire peripheral direction. The reinforcing cords in each outer ply are disposed to cross each other.

The inner breaker 6 is composed of one or more inner plies in which high elastic reinforcing cords such as steel cords are spirally wound in the tire peripheral direction. The shear rubber layer 7 is made of a high elastic rubber whose complex elastic modulus E* is preferably 70 MPa or more, or more preferably 90 MPa or more.

The reinforcing cord layer 2B has a sandwich structure where the shear rubber layer 7 formed from a high elastic rubber is sandwiched by the outer breaker 5 and the inner breaker 6 from both sides in the radial direction. This greatly enhances the rigidity of the tread ring 2, realizing a high rolling performance of the tire 1.

The hub portion 3 corresponds to a tire wheel and is fixed to an axle J (see FIG. 4) of the vehicle 50. The hub portion 3 includes: a disk portion 3A of a disk shape fixed to the axle J; and a cylindrical spoke attachment portion 3B integrally formed with an end portion (outer end portion) of the disk portion 3A located outside in the radial direction. The disk portion 3A has, at its center, a hub hole 3A1 in which a front end portion Ja of the axle J is inserted. In addition, in the disk portion 3A, a plurality of bolt insertion holes 3A2 in which bolt portions Jb of the axle J are inserted, are formed around the hub hole 3A1. The hub portion 3 is, as is the case with the tire wheel, made of a metal material such as steel, aluminum alloy, or magnesium alloy. Of course, the hub portion 3 may be made of a polymer material such as a synthetic resin having rigidity and strength equivalent to those of the above-mentioned metal materials.

The spoke portion 4 couples the tread ring 2 to the hub portion 3, and is, for example, made of a polymer material such as a synthetic resin. The spoke portion 4 is integrally formed with the tread ring 2 and the hub portion 3 by cast molding the polymer material. As the polymer material, a thermoplastic resin, a thermosetting resin or the like is preferable; from the viewpoint of security, a thermosetting resin such as epoxy resin, phenolic resin, urethane resin, silicon resin, polyimide resin, or melamine resin is preferable; and in particular, urethane resin having excellent elasticity is more preferable.

The spoke portion 4 includes: a tread-side annular portion 8 joined with an inner peripheral surface of the tread ring 2; a hub-side annular portion 9 joined with an outer peripheral surface of the hub portion 3; and a plurality of spoke plates 4A extending in the radial direction from the hub-side annular portion 9 to the tread-side annular portion 8.

In the present embodiment, as the tire 1 mounted on the vehicle 50, a non-pneumatic tire with the above-described configuration is described as one example. However, the tire 1 is not limited to the above-described configuration as far as it is a non-pneumatic tire whose inside is not filled with air. For example, the tire 1 may not include the spoke portion 4, and a part between the hub portion 3 and the tread ring 2 may be composed of a tread rubber containing a rubber component (rubber material) such as natural rubber (NR) or SBR (styrene-butadiene rubber).

As shown in FIG. 5, the vehicle 50 includes various types of sensors such as a wheel speed sensor 51, a lateral acceleration sensor 52, two vibration sensors 53, a temperature sensor 54, a thickness sensor 55, a steering angle sensor 56, a brake sensor 57, and a tread surface sensor 58. The sensors 51 to 55 are fixed to the hub portion 3, the spoke portion 4 or the like of the tire 1 via a mount member (not shown).

The wheel speed sensor 51 detects a wheel speed signal (rotation speed information) of the tire 1 during travelling. A control portion 61 of the control unit 60 calculates the number of rotations and the rotation speed of the tire 1 based on the wheel speed signal.

The lateral acceleration sensor 52 is attached to the hub-side annular portion 9. The lateral acceleration sensor 52 detects an acceleration in the lateral direction (lateral-direction acceleration) applied to the tire 1 during travelling.

As shown in FIG. 4, the vibration sensors 53 are respectively attached to a spoke plate 4A of the spoke portion 4 and the spoke attachment portion 3B of the hub portion 3 of the tire 1. The vibration sensors 53 detect vibrations that occur in the tire 1 during travelling of the vehicle 50. Specifically, they detect vibrations that occur in the spoke plate 4A and the spoke attachment portion 3B. In the present embodiment, the vibration sensors 53 respectively detect vibration values that occur in the spoke plate 4A and the spoke attachment portion 3B when the vehicle 50 travels at a predetermined set speed. The set speed is, for example, a speed in a low speed range (30 to 60 km/h).

The temperature sensor 54 detects a temperature of the tread ring 2 of the tire 1. It is provided at the tread-side annular portion 8 of each tire 1, and detects a temperature that has been transmitted from the tread ring 2 to the tread-side annular portion 8.

The thickness sensor 55 detects a thickness (a thickness from the reinforcing cord layer 2B to the tread surface 2S) of the tread ring 2 of the tire 1. Two thickness sensors 55 are provided on the tread-side annular portion 8 of each tire 1, and are installed with a predetermined interval therebetween in a width direction of the tire 1.

Each of the sensors 51 to 55 is connected to a transmitter (not shown) installed at the tire 1. A detection value of each of the sensors 51 to 55 is transmitted to the control unit 60 via the transmitter. Each of the sensors 51 to 55 may have any configuration as far as it can output a detection value of the detection object or a signal indicating the detection value. In addition, each of the sensors 51 to 55 is not limited to a specific attachment position or detection method as far as it can detect a detection value of the detection object. It is noted that when each of the sensors 51 to 55 is connected to the control unit 60 in such a way as to communicate in a wireless or wired manner, the detection value may be transmitted individually from each of the sensors 51 to 55 to the control unit 60.

The steering angle sensor 56 detects a steering angle that is a rotation angle of a handle 503. For example, the steering angle sensor 56 is installed at a steering shaft of the handle 503. The steering angle sensor 56 is connected to the control unit 60 in such a way as to communicate in a wireless or wired manner, and the steering angle (detection value) detected by the steering angle sensor 56 is transmitted to the control unit 60. The steering angle sensor 56 may have any configuration as far as it can detect the steering angle of the handle 503, and is not limited to a specific attachment position or detection method.

The brake sensor 57, when the driver has performed a brake operation, detects whether or not the operation has been performed, and detects a step amount (operation amount). The brake sensor 57 is, for example, a rotary encoder or a potentiometer installed at a brake pedal. The brake sensor 57 is connected to the control unit 60 in such a way as to communicate in a wireless or wired manner, and presence or absence (detection value) of the operation and the step amount (detection value) detected by the brake sensor 57 are transmitted to the control unit 60. The brake sensor 57 may have any configuration as far as it can detect the detection value concerning the brake operation, and is not limited to a specific attachment position or detection method.

The tread surface sensor 58 detects presence or absence of the tread groove on the tread surface 2S of the tread ring 2 of the tire 1, and detects information for measuring the tread groove depth. The tread surface sensor 58 may be, for example, a scanning type optical distance sensor installed at an inner surface of a tire house (not shown) of the vehicle 50. The optical distance sensor emits a laser beam to the tread surface 2S to scan in the tire width direction, and measures the distance to the tread surface 2S that is the detection object by receiving a reflection light reflected on the tread surface. In addition, the optical distance sensor generates and outputs trace data obtained by tracing the uneven shape of the tread surface 2S in the width direction. This allows the control portion 61 of the control unit 60 to determine presence or absence of the tread groove on the tread surface 2S and measure the tread groove depth based on the trace data. It is noted that a plurality of reflection type photo interrupters (also called photo reflectors) arranged on the inner surface of the tire house along the width direction may be applied instead of the optical distance sensor. In addition, a camera for picking up an image of the tread surface 2S or a line sensor for detecting a shape in the tire width direction may be applied instead of the optical distance sensor.

In addition, the vehicle 50 includes an operation switch 59. The operation switch 59 is a switch member operated by a driver or the like, and when the operation switch 59 is operated, an operation signal thereof is transmitted to the control unit 60.

In addition, the tire 1 is provided with a memory 67 (an example of a storage portion of the present disclosure) in which identification information of the tire 1 is stored. The memory 67 is a nonvolatile storage device. The memory 67 is, for example, fixed to the hub portion 3, the spoke portion 4 or the like of the tire 1 via a mount member (not shown). The identification information only needs to be able to distinguish the tire 1 from other tires, and is an ID number assigned to each of the tires. In addition, the identification information may include a size, a maker name, a model number, a product name, and a manufacturing year/month/day of the tire 1. When the tire 1 is mounted on the vehicle 50, the identification information is transmitted to the control unit 60 and the identification information is stored in a storage portion 62.

As shown in FIG. 5, the vehicle 50 includes the control unit 60 that comprehensively controls the vehicle 50. The control unit 60 is an information processing apparatus configured to execute various calculation processes. The control unit 60 includes the control portion 61, the storage portion 62, the communication portion 63, a GPS receiving portion 64, an output portion 65, and an input portion 66.

The communication portion 63 is a communication interface for wirelessly connecting the control unit 60 to a predetermined communication network and executing a data communication with an external apparatus such as the communication apparatus 40 via the communication network according to a predetermined communication protocol.

The GPS receiving portion 64 acquires position information indicating the travel position of the vehicle 50. The GPS receiving portion 64 detects the position of the vehicle 50 on ground by receiving a signal from a GPS satellite and performing a predetermined calculation process. The detected position information is transmitted to the control portion 61 to be used in the calculation processes such as a process to identify the travel position of the vehicle 50 and a process to identify the travel route of the vehicle 50.

The storage portion 62 is a nonvolatile storage medium or storage device, such as a flash memory, for storing various types of information. For example, the storage portion 62 stores a control program for causing the control portion 61 to execute various processes. The control program had been stored in an external storage apparatus, such as a server apparatus or an external storage, that can be communicably connected to the communication portion 63, and was read from the external storage apparatus and copied into the storage portion 62. Alternatively, the control program may have been recorded in a non-transitory manner in a computer-readable recording medium such as a CD or a DVD, and may have been read therefrom by a reader (not shown) electrically connected with the control unit 60 and copied into the storage portion 62.

In addition, the storage portion 62 stores detection values and data transmitted from each of the sensors 51 to 58, various types of information (the number of tire rotations, a travel speed, etc.) that have been obtained by conversion or generated based on the detection values and the data, information of the travel position (travel position information) of the vehicle 50 detected by the GPS receiving portion 64, and various types of information (travel route, etc.) that have been obtained by conversion or generated based on the travel position information.

The output portion 65 is an interface that outputs, in a wireless or wired manner, results of various processes executed by the control portion 61 and data in the storage portion 62. For example, a measuring instrument unit 501 and a display device 502 installed in the vehicle 50 are connected to the output portion 65. In addition, the memory 67 installed in the tire 1 is connected to the output portion 65 in a wireless or wired manner. For example, the control portion 61 outputs the speed information or the like to the measuring instrument unit 501 via the output portion 65, and outputs various types of information to the display device 502 in response to display requests from the driver or the like. In addition, the control portion 61 transfers the state data in the storage portion 62 to the memory 67 via the output portion 65.

The input portion 66 is an interface that is connected in a wireless or wired manner to the various sensors 51 to 58, the operation switch 59, the memory 67 and the like installed in the vehicle 50. Signals output from the various sensors 51 to 58, the operation switch 59 and the like, data read from the memory 67 and the like are input to the input portion 66.

The control portion 61 includes control equipment such as a CPU, a ROM, and a RAM. The CPU is a processor that executes various calculation processes. The ROM is a nonvolatile memory in which control programs, such as BIOS and OS, for causing the CPU to execute various processes are preliminarily stored. The RAM is a volatile or nonvolatile memory for storing various types of information and is used as a temporary storage memory (working area) for the various processes executed by the CPU. The control portion 61 executes the applicability determination process described below by causing the CPU to execute the various control programs preliminarily stored in the ROM or the storage portion 42.

The control portion 61 includes various processing portions such as a conversion processing portion 611 and a display processing portion 612. The control portion 61 functions as the various processing portions when the CPU executes various processes in accordance with the control programs. It is noted that a part or all of the processing portions included in the control portion 61 may be composed of an electronic circuit. In addition, processes described below executed by the conversion processing portion 611 may be executed by different processing portions. In addition, the control program may be a program for causing a plurality of processors to function as the various processing portions.

The conversion processing portion 611 performs a process to convert detection values and data that have been input to the input portion 66 from the various sensors 51 to 58, to state data related to the detection values and the data. In addition, the conversion processing portion 611 performs a process to generate state data related to the detection values and the data based on the detection values and the data. Here, the state data is an example of the tire-related information of the present disclosure, and includes, for example, the number of rotations of the tire 1 (the number of tire rotations), the travel speed of the vehicle 50, the acceleration of the vehicle 50, the lateral-direction acceleration applied to the tire 1, the temperature of the tire 1 (tire temperature), the tread groove depth on the tread surface 2S of the tire 1, the wear amount or wear speed of the tread ring 2 of the tire 1, the uneven wear amount of the tread ring 2, the steering angle of the vehicle 50, the number of times of braking, the brake step amount, and a vibration value that occurs in the tire 1 (for example, in the spoke plates 4A and the spoke attachment portion 3B) during travelling of the vehicle 50. In addition, the state data includes an average value, a maximum value, a minimum value or the like of each of these elements. In addition, with regard to the number of tire rotations and the number of times of braking, the number of rotations or the number of times per prescribed travel distance may be included in the state data. These pieces of state data are information about causes that may directly or indirectly exert influence on the deterioration of the base body portion of the tire 1 during travelling of the vehicle 50.

The number of tire rotations, the travel speed, and the acceleration can be obtained by conversion or generated based on the detection value (wheel speed signal) of the wheel speed sensor 51. The lateral-direction acceleration can be obtained by conversion or generated based on the detection value of the lateral acceleration sensor 52. The vibration value of the tire 1 can be obtained by conversion or generated based on the detection value of the vibration sensors 53. The tire temperature can be obtained by conversion or generated based on the detection value of the temperature sensor 54.

The tread groove depth on the tread surface 2S can be obtained by conversion or generated based on the data output from the tread surface sensor 58.

The wear amount can be obtained by conversion or generated based on the detection value of the thickness sensor 55. The uneven wear amount indicates a degree of uneven wear of the tread ring 2 of the tire 1. A specific example of the uneven wear amount is a difference in thickness between opposite ends of the tread ring 2 in the width direction, and it can be obtained by conversion or generated based on a difference between detection values obtained by a pair of thickness sensors 55 installed on the inner space surface of the tire 1 separate from each other in the width direction.

It is noted that the uneven wear that occurs on the tread ring 2 of the tire 1 includes what is called an unsymmetric wear (outer wear, inner wear), a both-shoulder wear, a center wear, a toe-in wear, a toe-out wear, a local wear, a corrugated wear, a pitted wear, and a sawtooth wear (heel and toe wear). Presence or absence of any of these uneven wears or a degree of the uneven wear (uneven wear amount) can be determined or measured by adjusting the number of thickness sensors 55 disposed to be attached to the tire 1 or the disposal positions thereof as appropriate.

The steering angle can be obtained by conversion or generated based on the detection value of the steering angle sensor 56. The number of times of braking and the brake step amount can be obtained by conversion or generated based on the detection value of the brake sensor 57.

The state data including the above-described various types of information obtained by the conversion processing portion 611 is stored in the storage portion 62 for each piece of identification information of the tire 1. In addition, the state data stored in the storage portion 62 is transferred to the memory 67 of each tire 1 via the output portion 65 and stored in the memory 67, for example, at a timing when the vehicle 50 stops and key-off is performed. With this configuration, even when the tire 1 is removed from the vehicle 50 and mounted on another vehicle 50 as a used tire, the state data of the tire 1 can be handed over to the other vehicle 50.

Among the state data, the number of tire rotations is accumulatively stored in the storage portion 62 as an accumulated number of rotations of the tire 1 during travelling of the vehicle 50. In addition, the travel speed is stored in the storage portion 62 as an average value of the travel speed (average speed) detected during travelling. The acceleration is accumulatively stored in the storage portion 62 as the number of times of occurrence of an excessive acceleration exceeding a predetermined threshold (predetermined value). The lateral-direction acceleration is accumulatively stored in the storage portion 62 as the number of times of occurrence (occurrence frequency) of an excessive lateral-direction acceleration exceeding a predetermined threshold (predetermined value).

The vibration value that occurs in the tire 1 is stored in the storage portion 62 as an average value (average vibration value) of vibration values detected by the vibration sensors 53 when the vehicle 50 travels at the set speed, and as the number of times of occurrence of an upper-limit vibration value exceeding a predetermined upper-limit threshold. When the vehicle 50 travels on a rough travel road surface, a large load may be applied to the tire 1. In this case, the vibration values detected by the vibration sensors 53 are higher than the vibration values detected when the vehicle 50 travels on a normal flat road surface. The upper-limit vibration value is set to a numerical value by which it can be determined that a larger load was applied to the tire 1 than during normal travelling.

The tire temperature is stored in the storage portion 62 as an average value of the temperature (average temperature) detected by the temperature sensor 54 during travelling of the vehicle 50. The numerical values of the wear amount and the uneven wear amount are stored in the storage portion 62 as they are. The steering angle is accumulatively stored in the storage portion 62 as the number of times of occurrence of an excessive steering angle exceeding a predetermined threshold (predetermined angle). The number of times of braking is accumulatively stored in the storage portion 62 as an accumulated number of times. The step amount is accumulatively stored in the storage portion 62 as the number of times of occurrence of excessive step amount (excessive step amount) exceeding a predetermined threshold (predetermined amount).

These pieces of information (state data) stored in the storage portion 62 are information about causes that may exert influence on the deterioration of the base body portion of the tire 1. That is, it is considered that the higher the numerical values of the above-mentioned pieces of information (the number of tire rotations, the average speed, the number of times of occurrence, etc.) are, the larger the load applied to the tire 1 is, promoting the deterioration or the wear of the base body portion. On the contrary, it is considered that the lower the numerical values of the above-mentioned pieces of information are, the smaller the load applied to the tire 1 is, the base body portion hardly deteriorating and hardly wearing. These pieces of information are used in the applicability determination process (see FIG. 7) described below.

In addition, with regard to the tread groove depth among the state data, the numerical value thereof is stored in the storage portion 62 as it is. The tread groove depth is information about a cause that may exert influence on the deterioration of the base body portion of the tire 1, and it is considered that the lower the numerical value thereof is, the lower the grip performance of the tire 1 is, the larger the load applied to the tire 1 is, promoting the deterioration or the wear of the base body portion. On the contrary, it is considered that the higher the numerical value of the tread groove depth is, the higher the grip performance of the tire 1 is, the smaller the load applied to the tire 1 is, the base body portion hardly deteriorating and hardly wearing. The tread groove depth is used in the applicability determination process (see FIG. 7) described below.

It is noted that the tire temperature tends to increase when a heavy load is applied to the tire, such as when the vehicle 50 is travelling on a highway or a road with many curves. In addition, the tire temperature tends to be higher when a damage such as a crack or a peeling-off has occurred on an inner portion of the tread ring 2 that is difficult to be visually observed from outside, than when such damage has not occurred. It is considered that this is because when the tread surface 2S of the tire 1 touches the road surface on the ground with a damage in the inner portion of the tread surface 2S, the tread ring 2 or the spoke portion 4 of the tire 1 is excessively deformed, and repetition of the deformation and restoration to the state of not touching the ground causes the tire temperature to be higher than usual.

In addition, the conversion processing portion 611 performs, based on the position information of the vehicle 50 input from the GPS receiving portion 64 to the input portion 66, a process of generating a travel route of the vehicle 50 from the position information and a process of calculating the travel distance for each type of travel route. The travel route is included in the state data. For example, information of the travel route may be a travel distance for each type of travel route. Specifically, as the information of the travel route, a distance of a flat road travelled (flat road travel distance), a distance of a mountain road travelled (mountain road travel distance), a distance of an urban area travelled (urban area travel distance), a distance of a highway travelled (highway travel distance), and the like are accumulatively stored in the storage portion 62. These pieces of information, too, are information about causes that may exert influence on the deterioration of the base body portion of the tire 1. That is, it is considered that the higher the ratio of the mountain road travel distance and the highway travel distance to the total travel distance travelled by the tire 1 is, the larger the load applied to the tire 1 is, promoting the deterioration or the wear of the base body portion. On the contrary, it is considered that the higher the ratio of the flat road travel distance and the urban area travel distance is, the smaller the load applied to the tire 1 is, the base body portion hardly deteriorating and hardly wearing. These pieces of information of the travel distance are used in the applicability determination process (see FIG. 7) described below. It is noted that the flat road, the mountain road, the road in the urban area, and the highway are an example of the type of travel route described above.

The display processing portion 612 performs a process to display various types of information on the display device 502. For example, upon receiving a result of the applicability determination process described below (determination result) transmitted from the state determination apparatus 10, the display processing portion 612 displays the determination result on the display screen of the display device 502.

[Database 30]

The database 30 has a storage area assigned to a state data storage portion 31. The state data storage portion 31 stores the state data acquired by the state determination apparatus 10 from the vehicle 50, in a state of being divided for each piece of identification information of the tire 1. A piece of identification information is assigned to each tire 1 and the state data is stored in the state data storage portion 31 for each piece of identification information. For this reason, even when the tire 1 is removed from the vehicle 50 and mounted on another vehicle 50 as a used tire, the state data can be handed over, and the state data can be updated to information or data that is newly detected.

[State determination apparatus 10]

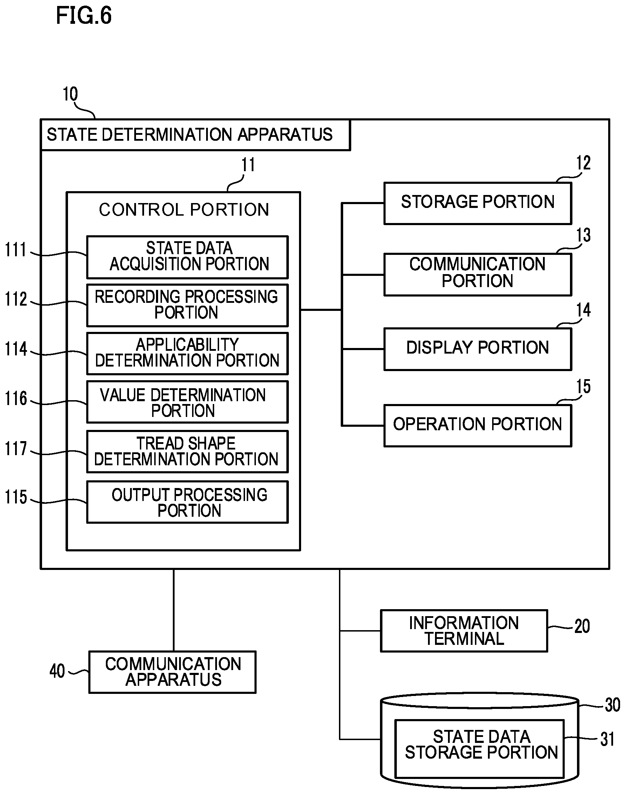

The following describes a specific configuration of the state determination apparatus 10 with reference to FIG. 6. FIG. 6 is a block diagram showing the configuration of the state determination apparatus 10.

The state determination apparatus 10 is for realizing the determination system 100 of the present embodiment, and as shown in FIG. 6, includes a control portion 11, a storage portion 12, a communication portion 13, a display portion 14, and an operation portion 15.

The communication portion 13 is a communication interface for connecting the state determination apparatus 10 to the communication network and executing a data communication with the information terminal 20 and the database 30 connected to the communication network, according to a predetermined communication protocol.

The storage portion 12 is a nonvolatile storage medium such as an HDD or an SSD for storing various types of information. The storage portion 12 stores: a control program for causing the control portion 11 to execute various processes; data and thresholds used in various processes; and a calculation formula described below for calculating an evaluation value used in the applicability determination process described below.

The evaluation value is an index for determining the state of the base body portion of the tire 1 and is an index for determining whether or not the base body portion of the tire 1 can be used as the base portion of the retreaded tire. When S denotes the evaluation value, $x_1$ denotes the number of tire rotations, $x_2$ denotes the average speed, $x_3$ denotes the number of times of occurrence of the excessive acceleration, $x_4$ denotes the number of times of occurrence of the excessive lateral direction acceleration, $x_5$ denotes the average vibration value, $x_6$ denotes the number of times of occurrence of the upper-limit vibration value, $x_7$ denotes the average temperature, $x_8$ denotes the wear amount, $x_9$ denotes the uneven wear amount, $x_{10}$ denotes the number of times of occurrence of the excessive steering angle, $x_{11}$ denotes the number of times of braking, $x_{12}$ denotes the number of times of occurrence of the excessive step amount, $x_{13}$ denotes an inverse value of the tread groove depth of the tire 1, and $S_0$ denotes the evaluation value of a new tire 1 (hereinafter referred to as a reference evaluation value), the evaluation value S is calculated based on the following formula (1) using the above-mentioned numerical values of the state data.

[Math 1]

$$S = S_0 - h \sum_{k=1}^{13} t_k x_k \quad \cdots (1)$$

Here, the coefficient $t_k$ ($t_1$, $t_2$, $t_3$, ..., $t_{13}$) in the formula (1) is a weight coefficient assigned to each numerical value $x_k$ ($x_1$, $x_2$, $x_3$, ..., $x_{13}$) of the state data, and is a coefficient that is determined based on which of each numerical value $x_k$ is emphasized. In addition, the coefficient h is a weight coefficient that is applied in correspondence with the travel distance travelled with the tire 1. For example, when the ratio of the mountain road travel distance and the highway travel distance to the total travel distance is higher than a predetermined reference ratio, the coefficient h is set to a numerical value larger than 1 (one) that is determined in correspondence with a difference (excessive amount) from the reference ratio. When the coefficient h is applied, the evaluation value S is larger than when the coefficient h is not applied. In addition, when the ratio of the flat road travel distance and the urban area travel distance to the total travel distance is higher than the reference ratio, the coefficient h is set to a numerical value smaller than 1 (one) that is determined in correspondence with a difference (excessive amount) from the reference ratio. In this case, the evaluation value S is smaller than when the coefficient h is not applied. It is noted that when the ratio of the mountain road travel distance and the highway travel distance to the total travel distance is lower than the reference ratio and the ratio of the flat road travel distance and the urban area travel distance to the total travel distance is lower than the reference ratio, the coefficient h is set to 1 (one).

As understood from the above-described formula, the evaluation value S is obtained by subtracting the sum total of the numerical value $t_k x_k$ from the reference evaluation value $S_0$. It is accordingly considered that the smaller the evaluation value S is, the larger the load applied to the tire 1 during travelling is, and the higher the possibility there is that a damage such as a crack, breakage, distortion, or peeling-off has occurred in the base body portion of the tire 1. In addition, it is considered that the larger the evaluation value S is, the smaller the load applied to the tire 1 during travelling is, and the lower the possibility there is that a damage such as a crack, breakage, distortion, or peeling-off has occurred in the base body portion of the tire 1. That is, the evaluation value S is an index indicating the degree of the state of the base body portion of the tire 1, a higher numerical value of the evaluation value S indicates a better state where the deterioration of the base body portion has not progressed, and a lower numerical value of the evaluation value S indicates a worse state where the deterioration of the base body portion has progressed.

The display portion 14 is a display device, such as a liquid crystal display, for displaying various types of information. The operation portion 15 is an input device, such as a mouse, a keyboard, or a touch panel, for receiving an operation of an operator.

The control portion 11 controls the state determination apparatus 10. The control portion 11 includes control equipment such as a CPU, a ROM, and a RAM. The CPU is a processor that executes various calculation processes. The ROM is a nonvolatile storage medium in which control programs, such as BIOS and OS, for causing the CPU to execute various processes are preliminarily stored. The RAM is a volatile or nonvolatile storage medium for storing various types of information and is used as a temporary storage memory (working area) for the various calculation processes executed by the CPU. The control portion 61 controls the state determination apparatus 10 by causing the CPU to execute the various control programs preliminarily stored in the ROM or the storage portion 12.

As shown in FIG. 6, the control portion 11 includes various types of processing portions including: a state data acquisition portion 111 (an example of an acquisition portion of the present disclosure); a recording processing portion 112 (an example of a recording portion of the present disclosure); an applicability determination portion 114 (an example of a reusability determination portion of the present disclosure); a value determination portion 116 (an example of a value determination portion of the present disclosure); a tread structure determination portion 117 (an example of a tread structure determination portion of the present disclosure); and an output processing portion 115 (an example of an output processing portion of the present disclosure). The control portion 11 functions as the above-described various processing portions when the CPU executes various calculation processes in accordance with the control programs. The control portion 11 or the CPU is an example of a computer or a processor that executes the control programs. It is noted that a part or all of the processing portions included in the control portion 11 may be composed of an electronic circuit. In addition, the control program may be a program for causing a plurality of processors to function as the various processing portions.

The state data acquisition portion 111 performs a process to acquire the state data concerning the causes that may exert influence on the deterioration of the base body portion of the tire 1. Specifically, when a communication between the communication apparatus 40 and the vehicle 50 is established, the state data acquisition portion 111 performs the process to acquire the state data from the vehicle 50. In addition, the state data acquisition portion 111 performs a process to acquire the identification information of the tire 1 from the vehicle 50. In the present embodiment, the state data acquisition portion 111 transmits a data acquisition request to the vehicle 50. Upon receiving the data acquisition request, the control portion 61 of the vehicle 50, in response to the data acquisition request, reads identification information in the storage portion 62 and state data corresponding to the identification information, and transmits them to the state determination apparatus 10.

The recording processing portion 112 performs a process to record the state data acquired by the state data acquisition portion 111, onto the state data storage portion 31 (storage medium) of the database 30. Specifically, when the state data corresponding to the identification information is not present in the state data storage portion 31, the recording processing portion 112 stores the state data, together with the identification information, in the state data storage portion 31 in linkage with the identification information. In addition, when the state data corresponding to the identification information is present in the state data storage portion 31, the recording processing portion 112 updates the state data corresponding to the identification information to the state data acquired by the state data acquisition portion 111.

The applicability determination portion 114 performs a determination process to determine, based on the state data acquired by the state data acquisition portion 111, whether or not the base body portion of the tire 1 is reusable.

In the present embodiment, the applicability determination portion 114 calculates, based on the state data, the evaluation value S that indicates the degree of the state of the base body portion of the tire 1 corresponding to the identification information. Specifically, the applicability determination portion 114 calculates the evaluation value S by applying each numerical value included in the state data and predefined coefficients h and $t_k$ to the calculation formula indicated by the formula (1).

As described above, the smaller the evaluation value S is, the higher the possibility there is that a damage such as a crack, breakage, distortion, or peeling-off has occurred in the base body portion of the tire 1; and the larger the evaluation value S is, the lower the possibility there is that the damage has occurred in the base body portion of the tire 1. It can be said from this that the evaluation value S indicates the degree of the state of the base body portion of the tire 1. In other words, the evaluation value S is an index that indicates whether the base body portion is in a good state or a bad state.

The applicability determination portion 114 determines, based on the evaluation value S calculated using the calculation formula, whether or not the base body portion of the tire 1 is reusable. Specifically, the applicability determination portion 114 determines whether or not the base body portion of the tire 1 is applicable to a base portion of a retreaded tire. In the present embodiment, when the evaluation value S is equal to or higher than a predetermined reference value, the applicability determination portion 114 determines that it is applicable to the retreaded tire. In addition, when the evaluation value S is lower than the reference value, the applicability determination portion 114 determines that it is not applicable to the retreaded tire.

A large number of tires 1 whose life ended may be subjected to a primary inspection such as a visual inspection or a touch inspection, a secondary inspection in which a high-voltage inspection or a shearography inspection using ultrasonic waves is performed to detect presence or absence of a damage such as a crack, breakage, distortion, or peeling-off in an inner portion of the tire 1, and an overhaul inspection in which the tire 1 is cut to inspect the presence or absence of a damage in the inner portion, and the reference value may be set to the largest numerical value of the evaluation value S among those of tires 1 whose inspection results were determined as excellent, namely, tires 1 that were determined as applicable to the base portion of the retreaded tire.

Upon a determination by the applicability determination portion 114 that the base body portion of the tire 1 is reusable, the value determination portion 116 performs a process to determine a value of the tire 1 based on the evaluation value S. This determination process is executed on a tire 1 whose base body portion has been determined by the applicability determination portion 114 as applicable to a base portion of a retreaded tire.

In the present embodiment, the value determination portion 116 determines a durability level of the base body portion based on the evaluation value S, and determines the value of the tire 1 based on the durability level. Here, the durability level is a difference value that is obtained, when the evaluation value S is equal to or larger than the reference value, by subtracting the reference value from the evaluation value S. The larger the difference value is, the larger the durability level of the tire 1 is, and the smaller the difference value is, the smaller the durability level of the tire 1 is. The value determined by the value determination portion 116 may be, for example, a market value of a used tire 1 to be used as a retreaded tire, such as a buying price or a selling price of the tire 1. Alternatively, the value may be an index corresponding to price information such as the buying price or the selling price.

When the value is the above-mentioned market price, the value determination portion 116 can calculate it by multiplying the new article price of the tire 1 by a ratio corresponding to the difference value. It is noted that new article prices of various types of tires 1 may be preliminarily stored in the storage portion 12 or the database 30, or may be acquired from tire sales sites managed by tire sales companies on the Internet.

In addition, when the value is the above-mentioned index, the value determination portion 116 may set a reference score of a new article tire 1 to 100 points, and calculate a relative score relative to the reference score by multiplying the reference score by a ratio corresponding to the difference value. In addition, the value determination portion 116 may calculate a score or a rank that indicates the degree of the tire 1.

It is noted that the value determination portion 116 may determine the value of only the base body portion of the tire 1, not the value of the tire 1, or determine both the value of the tire 1 and the value of the base body portion.

The tread structure determination portion 117, upon a determination by the applicability determination portion 114 that the base body portion of the tire 1 is reusable as a base portion of a retreaded tire, performs a process to determine a structure (tread structure) of a new tread ring 2 with which the current one is replaced during retreading. Specifically, the tread structure determination portion 117 determines: a shape of a tread pattern (an example of the tread structure) of the tread ring 2 corresponding to the state data acquired by the state data acquisition portion 111; a material of tread rubber (an example of the tread structure) of the tread ring 2 corresponding to the state data; or the like. It can be said that the structure of the tread ring 2 determined by the tread structure determination portion 117 is suitable for the tire 1 in the state indicated by the state data. It is noted that the shape and the material determined by the tread structure determination portion 117 are mere examples, and the tread structure determination portion 117 may determine an inner structure of the tread ring 2, a blend ratio of the material of the tread rubber, or the like.

The tread structure determination portion 117 compares one or more of the number of tire rotations, an average value of the travel speed (average speed), an average value of the acceleration (average acceleration), an average value of the lateral direction acceleration (lateral direction acceleration average value), an average value of the tire temperature (tire average temperature), the tread groove depth, the wear amount of the tread ring 2, the wear speed of the tread ring 2, the uneven wear amount of the tread ring 2, an average value of the steering angle (average steering angle), the number of times of braking, an average value of the brake step amount (average step amount), and an average value of the vibration value (average vibration value) included in the state data with a predetermined reference value defined for each of these elements, and determines the shape of the tread ring 2 corresponding to the comparison result.

For example, when an element such as the average speed, the average acceleration, the lateral direction acceleration average value, the average steering angle, the number of times of braking, or the average step amount is smaller than the reference value, a travel load of the tire 1 is considered to be small. Accordingly, the tread structure determination portion 117 determines a tread pattern with which performances such as straight advance stability, rotatability, ride comfort, silence, and dry performance are excellent, and determines a material of the tread rubber with which these performances are excellent. On the other hand, when any of the above-mentioned elements is larger than the reference value, the travel load of the tire 1 is considered to be large. In this case, the tread structure determination portion 117 determines a tread pattern with which performances such as grip performance and wet performance are excellent, and determines a material of the tread rubber with which these performances are excellent. It is noted that with regard to information of the tread pattern and the material to be determined, information corresponding to each numerical value of each of the above-mentioned elements is preliminarily stored in the storage portion 12, and the tread structure determination portion 117 can consult the information in the storage portion 12 to extract information of the tread pattern and the material of the tread rubber corresponding to each numerical value of each element.

In addition, when an element such as the tire average temperature, a reduction amount of the tread groove depth, the wear amount of the tread ring 2, the wear speed of the tread ring 2 (wear amount per prescribed distance), or the uneven wear amount of the tread ring 2 is smaller than the reference value, it is considered to have sufficient performance with regard to the wear resistance. In this case, the tread structure determination portion 117 determines, for example, a tread structure (an example of a structure of the tread portion in reuse) whose fuel economy or the like is improved by reducing the thickness of the tread ring 2. On the other hand, when any of the above-mentioned elements is larger than the reference value, it is considered to have insufficient performance with regard to the wear resistance. Accordingly, in this case, the tread structure determination portion 117 determines, for example, a tread structure (an example of the structure of the tread portion in reuse) whose wear resistance is improved by increasing the thickness of the tread ring 2 or increasing the hardness of the tread rubber of the tread ring 2. It is noted that with regard to information of the tread structure to be determined, information corresponding to each numerical value of each of the above-mentioned elements is preliminarily stored in the storage portion 12, and the tread structure determination portion 117 can consult the information in the storage portion 12 to extract information of the tread structure corresponding to each numerical value of each element.

In addition, when the average vibration value is smaller than the reference value, it is considered to have sufficient performance with regard to the ride comfort. Accordingly, in this case, the tread structure determination portion 117 determines, for example, a tread structure (an example of the structure of the tread portion in reuse) whose handling stability is improved by increasing the hardness of the tread rubber of the tread ring 2. On the other hand, when the average vibration value is larger than the reference value, it is considered to have insufficient performance with regard to the ride comfort. Accordingly, in this case, the tread structure determination portion 117 determines, for example, a tread structure (an example of the structure of the tread portion in reuse) whose ride comfort performance is improved by increasing the thickness of the tread ring 2 or reducing the hardness of the tread rubber of the tread ring 2. It is noted that in this case, too, with regard to information of the tread structure to be determined, information corresponding to each numerical value of the average vibration value is preliminarily stored in the storage portion 12, and the tread structure determination portion 117 can consult the information in the storage portion 12 to extract information of the tread structure corresponding to the average vibration value.

The determination result of the tread structure determination portion 117 is output to the measuring instrument unit 501 and the display device 502 of the vehicle 50, the information terminal 20, or the like. This allows the owner of the vehicle 50 or the tire 1 to receive, from the determination system 100, a proposal for a tread structure after retreading suitable for the state data of the tire 1. As a result, when the tire 1 is retreaded, the owner can easily grasp the tread ring 2 of the tread structure suitable for the tire 1 in the state indicated by the state data.

The output processing portion 115 performs a process to output results of various processes executed in the determination system 100. In the present embodiment, the output processing portion 115 performs a process to output the evaluation value S calculated by the applicability determination portion 114, a determination result (whether or not applicable) of the applicability determination portion 114, information (value information) indicating the value of the tire 1 determined by the value determination portion 116, or the tread structure determined by the tread structure determination portion 117. In the present embodiment, the output processing portion 115 performs a process to display information of the evaluation value S, the determination result, the value information, and the tread structure on the display portion 14. In addition, upon receiving a transfer request from the vehicle 50 or the information terminal 20, the output processing portion 115 may output, in response to the transfer request, information of the evaluation value S, the determination result, the value information, and the tread structure to the vehicle 50 or the information terminal 20. In addition, upon receiving a transfer request from a server apparatus that controls a tire sales site on the Internet, the output processing portion 115 may output, in response to the transfer request, the above-mentioned types of information to the server apparatus of the tire sales site that is a transfer source. It is noted that the information of the evaluation value S, the determination result, the value information, and the tread structure is an example of determination information of the present disclosure.

[Applicability determination process]

In the following, with reference to the flowchart of FIG. 7, a description is given of an example of the procedure of the applicability determination process executed in the determination system 100, as well as a tire state determination method of the present disclosure. In the following, a description is given of the applicability determination process executed by the control portion 11 of the state determination apparatus 10. Here, the applicability determination process includes: a process to calculate the evaluation value S that indicates the state of the base body portion of the tire 1 being the inspection object; a process to determine, based on the evaluation value S, whether or not the base body portion can be used as the base portion of the retreaded tire; and a process to determine the value of the tire 1.

As shown in FIG. 7, in step S101, the control portion 11 of the state determination apparatus 10 determines whether or not a determination request has been input. Here, the determination request is a command signal that is input, via the operation portion 15, by a user who operates the state determination apparatus 10. It is noted that the determination request may be input from the information terminal 20 operated by the user to the state determination apparatus 10. In addition, the user who is riding on the vehicle 50 may operate a vehicle-mounted terminal to input the determination request from the vehicle 50 to the state determination apparatus 10.

Upon receiving the determination request, the control portion 11 determines whether or not a communication between the communication apparatus 40 and the vehicle 50 is established (S102), and when a communication with the vehicle 50 is possible, transmits the data transfer request to the vehicle 50 (S103). The data transfer request is a command signal for requesting a transmission of the state data. Upon receiving the data transfer request, the control portion 61 of the vehicle 50 reads the identification information and the state data in the storage portion 62 and transmits them to the state determination apparatus 10. It is noted that steps S102 and S103 are an example of an acquisition step of the present disclosure.

Upon acquiring, in step S104, the identification information and the state data transmitted from the vehicle 50, the control portion 11 performs a process to calculate the evaluation value S by using the calculation formula shown in the formula (1) and the state data (S105). In the next step S106, the control portion 11 performs a determination process to determine whether or not the base body portion of the tire 1 is reusable, namely, a determination process to determine whether or not the base body portion is applicable to the base portion of the retreaded tire. Specifically, the control portion 11 determines, based on the evaluation value S calculated in step S105, whether or not the base body portion of the tire 1 is reusable as the base portion of the retreaded tire. In the present embodiment, in step S106, the control portion 11 determines whether or not the evaluation value S is equal to or higher than the predetermined reference value. It is noted that step S106 is an example of a determination step of the present disclosure.

When the evaluation value S is equal to or higher than the threshold, the control portion 11 determines that the base body portion of the tire 1 is reusable (Yes at S106). That is, the control portion 11 determines that the base body portion of the tire 1 is applicable to the base portion of the retreaded tire. In this case, in the next step S107, the control portion 11 determines the value of the tire 1. The value determined here is, for example, the market value (the buying price, the selling price, or the like) of the tire 1 to be used as the base portion of the retreaded tire, or the index (the relative score or the like).

In the next step S1071, the control portion 11 determines, based on the state data acquired by the state data acquisition portion 111, the tread structure (the shape of the tread pattern, the material of the tread ring 2, or the like) of the tread ring 2 corresponding to the state data.

Subsequently, the control portion 11 outputs, to the display portion 14, applicable information (determination result) indicating that it is applicable to the base portion, and the evaluation value S, and displays them on the display portion 14 (S108). In addition, when the processes of steps S107 and S1071 have been executed, the control portion 11 outputs, to the display portion 14, the value information indicating the value of the tire 1 determined in step S107 and information of the tread structure determined in step S1071, and displays them on the display portion 14 (S108).

On the other hand, when the evaluation value S is lower than the threshold, the control portion 11 determines that the base body portion of the tire 1 is not reusable (No at S106). That is, the control portion 11 determines that the base body portion of the tire 1 is not applicable to the base portion of the retreaded tire. In this case, the control portion 11 outputs inapplicable information (determination result) indicating that it is inapplicable to the base portion, and the evaluation value S to the display portion 14, and displays them on the display portion 14 (S109).

It is noted that when the request source of the determination request is the vehicle 50, the control portion 11 may transmit information such as the value information, the applicable information, and the evaluation value S to the vehicle 50. In addition, when the request source of the determination request is the information terminal 20, the control portion 11 may transmit information such as the value information, the applicable information, and the evaluation value S to the information terminal 20. In addition, when the request source of the determination request is a server apparatus controlling a tire sales site on the Internet or the like, the control portion 11 may transmit information such as the value information, the applicable information, and the evaluation value S to the server apparatus of the tire sales site that is the transfer source.

In addition, in a case where a transfer request that requests a transfer of the determination result (the applicable information or the inapplicable information) of the applicability determination portion 114, the evaluation value S, or the like has been received (S110), the control portion 11 transmits information such as the determination result, the value information, and the evaluation value S to the request source of the transfer request (S111). This ends a series of processes. In addition, in a case where the transfer request has not been received, a series of processes ends after the output process of step S108 or step S109.

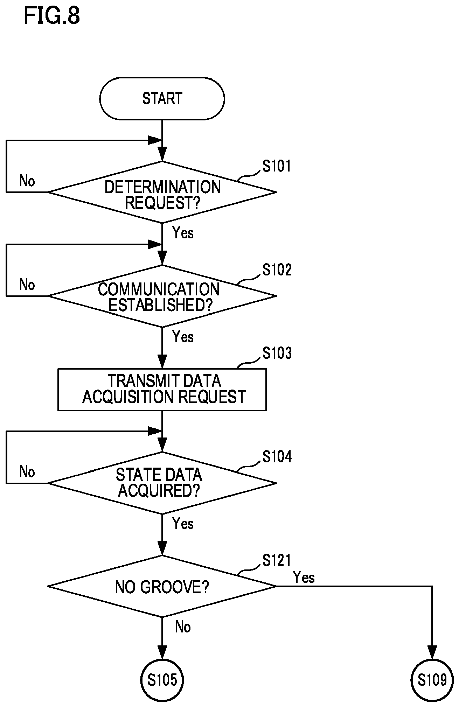

In another example of the applicability determination process executed in the determination system 100, each process may be executed in accordance with the procedure shown in the flowchart of FIG. 8. For example, processes of steps S101 to S103 are performed as described above, then after the identification information and the state data are acquired in the following step S104, the control portion 11 determines, in step S121, whether or not the tread surface 2S of the tire 1 has a tread groove. The determination process of step S121 is performed based on the tread groove depth information included in the state data. Specifically, when the tread groove depth is zero or a numerical value that can be evaluated as zero, the control portion 11 determines that the tread surface 2S of the tire 1 has no tread groove.

When the tread surface 2S of the tire 1 has no tread groove at a point in time when the user inputs the determination request, there is a high possibility that the vehicle 50 has travelled in a state of having no tread groove. In this case, it is considered that an excessive load has been applied to the tire 1, and there is a high possibility that the base body portion of the tire 1 has been damaged. Accordingly, upon a determination in step S121 that the tread surface 2S of the tire 1 has no tread groove, the control portion 11 determines that the base body portion of the tire 1 is inapplicable to the base portion of the retreaded tire and moves the process to step S109 (see FIG. 7), without performing the process of step S105 and subsequent processes. On the other hand, upon a determination in step S121 that there is a tread groove, the control portion 11 moves the process to step S105 and performs the process of step S105 and subsequent processes.

It is noted that in a case where a camera for picking up an image of the tread surface of the tire 1 is installed at an inner surface of a tire house of the vehicle 50, the control portion 11, for example, may acquire image data of the image picked up by the camera together with the state data and determine, based on the image data, whether or not a foreign substance, such as a nail or a metal piece, is stuck in the tread ring 2 of the tire 1. When such a foreign substance is stuck in the tread portion, the base body portion of the tire 1 is seriously damaged, and the base body portion of the tire 1 is inapplicable to the base portion of the retreaded tire. As a result, upon determining that a foreign substance is stuck in the tread ring 2 of the tire 1, the control portion 11 may move the process to step S109 (see FIG. 7), without performing the process of step S105 and subsequent processes.

As described above, in the determination system 100 of the present embodiment, the evaluation value S that indicates the state of the base body portion is calculated based on the state data that includes various types of information of the causes that may exert influence on the deterioration of the base body portion of the tire 1. In addition, it is determined based on the evaluation value S whether or not the base body portion of the tire 1 is reusable as a base portion of a retreaded tire. As a result, the user using the determination system 100 can grasp the usability of the base body portion of the tire 1 mounted on the vehicle 50, without performing a primary inspection such as a visual inspection or a touch inspection, or a secondary inspection such as a high-voltage inspection or a shearography inspection.

In addition, when the user using the determination system 100 is an inspector who inspects the applicability to a base portion of a retreaded tire, the inspector can preliminarily grasp whether or not the base body portion of the tire 1 is reusable as the base portion of the retreaded tire before the inspector performs the primary inspection or the secondary inspection. With this configuration, the inspector can remove the tire 1 in a bad state from the inspection object, thereby reducing the work load on the inspection and restricting an inspection cost.

In addition, when the user using the determination system 100 is an owner of the vehicle 50, the owner can grasp the current state of the base body portion of the tire 1 mounted on the vehicle 50, namely, whether or not the base body portion of the tire 1 is reusable as the base portion of the retreaded tire.

In the above-described embodiment, a calculation example is described in which the applicability determination portion 114 calculates the evaluation value S by using the number of tire rotations $x_1$, the average speed $x_2$, the number of times of occurrence of the excessive acceleration $x_3$, the number of times of occurrence of the excessive lateral direction acceleration $x_4$, the average vibration value $x_5$, the number of times of occurrence of the upper-limit vibration value $x_6$, the average temperature $x_7$, the wear amount $x_8$, the uneven wear amount $x_9$, the number of times of occurrence of the excessive steering angle $x_{10}$, the number of times of braking $x_{11}$, the number of times of occurrence of the excessive step amount $x_{12}$, an inverse value of the tread groove depth of the tire 1 $x_{13}$, the coefficient $t_k$, the coefficient h, the reference evaluation value $S_0$, and the calculation formula of the formula (1). However, the present disclosure is not limited to the calculation example. For example, the evaluation value S may be calculated by using the reference evaluation value $S_0$ and one or more of each numerical value $x_k$ of the above-described items. In addition, a numerical value obtained by subtracting the sum total of each numerical value $x_k$ from the reference evaluation value $S_0$ without using the coefficient $t_k$ and the coefficient h may be set as the evaluation value S. In addition, an inverse value of the sum total of each numerical value $x_k$ may be set as the evaluation value S, without using the reference evaluation value $S_0$.

In addition, in a case where the number of times of retreading (the number of replacements of the tread ring 2) performed in the past is stored in the memory 67 of the tire 1, the number of times of retreading may be included in the state data. In this case, the applicability determination portion 114 calculates the evaluation value S by further taking into consideration the number of times of retreading. For example, in a case where the tire 1 is a retreaded tire with the tread ring 2 having been replaced and the number of times of retreading in the past is stored in the memory 67, the evaluation value S may be calculated by setting a weight coefficient corresponding to the number of times and multiplying the weight coefficient by the sum total of each numerical value $x_k$ of the right side of the formula (1). It is considered that the more the number of times of retreading is, the larger the load applied to the tire 1 is, and the base body portion is more easily deteriorated. As a result, in this case, the weight coefficient is set to a numerical value larger than 1 (one) that is determined in correspondence with the number of times of retreading.

In addition, the state data may include, other than the information of each numerical value $x_k$ described above, for example, road surface information indicating the state of a travel road surface (road surface state) on which the vehicle 50 travels, the weather during traveling, the air temperature during traveling, or the load applied to the tire 1 during traveling.

The road surface information is an index indicating a degree of unevenness of the road surface that may exert influence on the wear of the tread ring 2 of the tire 1. The state of the road surface on which the vehicle 50 travels is varied and is different depending on the pavement construction method. For example, the material of pavement constructed on the road surface includes asphalt, concrete, concrete blocks, tiles, natural stones, crushed stones, wood chips, wood lumps, and earth. These materials have different influences on the wear of the tread ring 2. In addition, even when the pavement materials belong to a same series, they are different in grain size depending on the various objectives or purposes, have different mixtures added, and have different influences on the wear of the tread ring 2. For example, it is considered that the higher the degree of unevenness of the road surface is, the more easily the tread ring 2 wears, and the more easily the base body portion is deteriorated. On the other hand, it is considered that the lower the degree of unevenness of the road surface is, the more hardly the tread ring 2 wears, and the more hardly the base body portion is deteriorated. The road surface information may be obtained by the control portion 11 based on an image of the road surface picked up by a camera installed on the vehicle 50. For example, the control portion 11 can obtain the road surface information by determining a state of the road surface on which the vehicle is travelling by performing image processing on the image of the road surface, and selecting an index corresponding to the determined state of the road surface from a plurality of predetermined indices included in table data respectively corresponding to various types of road surface states.

With regard to the weather or the air temperature during travelling, weather information or air temperature information of the travel position can be acquired from a predetermined web site via the Internet. For example, it is considered that the better the weather is, the more amount of ultraviolet reaches the ground, and the radiation of ultraviolet causes the base body portion to be deteriorated more easily; and that the worse the weather is, the less amount of ultraviolet reaches the ground, and the deterioration of the base body portion by the radiation of ultraviolet is restricted. In addition, it is considered that the higher the air temperature is, the more easily the temperature of the tire 1 increases, the more easily the wear is promoted, and the more easily the base body portion is deteriorated; and that the lower the air temperature is, the more hardly the temperature of the tire 1 increases, the more hardly the wear is promoted, and the more hardly the base body portion is deteriorated.

In addition, with regard to the load applied to the tire 1, for example, a distortion sensor may be installed on the inner space surface of the tire 1, a contact area may be measured, based on an output signal of the distortion sensor, from a time period (contact time) from when the distortion sensor touches the ground to when it is separated from the ground, and the load may be estimated based on the contact area, the air pressure, and the weight of the vehicle 50. For example, it is considered that the larger the load is, the more easily the base body portion is deteriorated, and that the smaller the load is, the more hardly the base body portion is deteriorated.

In addition, in a case where the manufacturing year/month/day of the tire 1 is stored in the memory 67, the number of years elapsed between the time when the tire 1 was manufactured and the current time may be included in the state data, and the evaluation value S may be calculated by using the calculation formula of the formula (1). That is, a weight coefficient corresponding to the number of elapsed years may be set and the evaluation value S may be calculated by using the weight coefficient in the formula (1). In addition, when there is an error between the moving distance calculated from the position information of the GPS receiving portion 64 and the moving distance calculated from the rotation speed of the tire 1, it is considered that the larger the error is, the smaller the outer diameter size of the tire 1 during travelling is than a predefined size, and there is a possibility that the tire 1 is damaged. For this reason, the error may be included in the state data and the evaluation value S may be calculated by using the calculation formula of the formula (1). That is, a weight coefficient corresponding to the error may be set, and the evaluation value S may be calculated by using the weight coefficient in the formula (1).

In addition, in the above-described embodiment, an example is described in which the state data including various types of information about the causes that may exert influence on the deterioration of the base body portion of the tire 1 is acquired, and the evaluation value S indicating the state of the base body portion is calculated based on the state data. However, not limited to this, for example, the evaluation value S may be calculated by taking into consideration some elements such as: a profile of the tire 1 that is the determination object (information indicating the profile of the tire 1); a tire structure; a tread pattern; materials of the tire 1; and blend information of each of the materials. In addition, the evaluation value S may be calculated by taking into consideration a driving system (FF, FR, 4WD, etc.) of the vehicle 50. In addition, the evaluation value S may be calculated by taking into consideration an adjustment value of the wheel alignment. Specifically, a weight coefficient may be defined in correspondence with each of the above-mentioned elements, and a calculation method of calculating the evaluation value S by using the weight coefficient in the formula (1) may be adopted. It is noted that information indicating each of the above-mentioned elements, numerical values, the weight coefficients and the like are preliminarily stored in the memory 67 installed in the tire 1 or the storage portion 12 of the state determination apparatus 10.

The above-described embodiment shows an example configuration where the state data acquisition portion 111, the recording processing portion 112, the applicability determination portion 114, the value determination portion 116, the tread structure determination portion 117, and the output processing portion 115 are realized by the control portion 11 of the state determination apparatus 10. However, not limited to this, a part or all of these processing portions may be realized by the control portion 61 of the control unit 60 of the vehicle 50, a processor in a vehicle-mounted terminal installed in the vehicle 50, or a control portion of the information terminal 20. That is, the process of each step of the flowchart shown in FIG. 7 may be executed by any of the state determination apparatus 10, the vehicle 50, and the information terminal 20. In addition, the conversion processing portion 611 realized by the control portion 61 of the control unit 60 may be realized by the control portion 11 of the state determination apparatus 10 or the control portion of the information terminal 20.

In addition, in the above-described embodiment, a processing example is described in which it is determined whether or not the base body portion of the tire 1 mounted on the vehicle 50 is usable as the base portion of the retreaded tire. However, the present disclosure is not limited to this configuration. For example, even in a case where a tire 1 removed from the vehicle 50 is brought to an inspection site, the evaluation value S indicating the state of the tire 1 can be calculated, and it can be determined based on the evaluation value S whether or not the base body portion of the tire 1 is usable as the base portion of the retreaded tire. In this case, it is preferable that the memory 67 installed in the tire 1 is a storage device for reading and writing by a noncontact system corresponding to RFID or the like, and the communication apparatus 40 is a reader/writer that can communicate with the storage device. This makes it possible for the communication apparatus 40 to read the identification information and the state data in the memory 67, and the state determination apparatus 10 introduced into the inspection site can execute each of the above-described processes.

It is noted that the processing example in which the evaluation value S is calculated by using the calculation formula of the formula (1) and it is determined whether or not the tire 1 is reusable, is only an example. The following describes another processing example of the applicability determination process performed by the applicability determination portion 114. The applicability determination portion 114 may calculate the evaluation value S and determine whether or not the tire 1 is reusable, by using a determination model constructed based on teacher data preliminarily prepared. Here, the teacher data is information used to generate the determination model and is stored in a storage area assigned in the database 30. In addition, the determination model is stored in the storage portion 12 of the state determination apparatus 10.

The teacher data is a dataset that includes, for a large number of used tires 1 whose life ended: a numerical value of the state data having a causal relation with a damage such as a crack, breakage, distortion, or peeling-off of the tire 1; and an evaluation point given by an inspector to the result of each inspection such as the primary inspection, the secondary inspection, and the overhaul inspection performed by the inspector.

The determination model is a learnt model that is used in the applicability determination process performed by the applicability determination portion 114 and calculates an evaluation value that indicates the state of the base body portion of the tire 1 that is the determination object. Upon an input of the state data of the tire 1 to an input portion, the determination model determines the evaluation value indicating the state of the base body portion, and outputs the evaluation value from an output portion. It is noted that the determination model is generated by a machine learning performed by the control portion 11, based on the teacher data stored in the database 30 and a predetermined algorithm.

When the evaluation value is calculated by using the determination model, as the state data, for example: history information of detection values detected by the sensors 51 to 58 during travelling of the vehicle 50, namely: history data of the rotation speed of the tire 1; history data of the lateral-direction acceleration; history data of the air pressure of the tire 1; history data of the temperature of the tire 1; history data of the wear amount of the tread ring 2; history data of the steering angle; and history data of the brake step amount, may be applied. In addition, as the state data, various types of history data such as history data of the travel position measured by the GPS receiving portion 64 and history data of the travel speed and acceleration of the vehicle 50; retreading history; the number of years elapsed from the time when the tire 1 was manufactured; and information of the maker name, may be applied.

It is possible to determine whether or not the tire 1 is applicable to the base portion of the retreaded tire, by calculating the evaluation value by using the above-described determination model and comparing the evaluation value with the reference value. This improves the accuracy of the reference value, thereby further improving the accuracy of the determination process performed by the applicability determination portion 114.

The embodiments of the present disclosure described above include the following disclosure items (1) to (14).

Disclosure item (1) according to an aspect of the present disclosure is a tire state determination system configured to determine a state of a non-pneumatic tire that is used for travelling of a vehicle. The tire state determination system includes: an acquisition portion configured to acquire tire-related information that may exert influence on deterioration of a base body portion that is a part of the non-pneumatic tire excluding a tread portion; and a reusability determination portion configured to perform a determination process to determine, based on the tire-related information, whether or not the base body portion is reusable.

With the above-described configuration of the tire state determination system according to the present disclosure, it is possible to determine whether or not a tire is reusable as a retreaded tire even when the tire is a non-pneumatic tire. In addition, when an inspector uses the present system, the inspector can preliminarily obtain a determination result on whether or not it is reusable before the inspector performs a primary inspection such as a visual inspection or a touch inspection, and a secondary inspection such as a high-voltage inspection or a shearography inspection. This makes it possible for the inspector to remove a non-pneumatic tire in a bad state that was determined as not reusable, from the inspection object, thereby reducing the inspection load of the inspector and restricting an inspection cost.

In addition, when an owner of the vehicle uses the present system, the owner can preliminarily grasp the determination result (reusability) of the base body portion of the non-pneumatic tire mounted on the vehicle.

Disclosure item (2) is the tire state determination system according to the disclosure item (1), wherein the tire-related information is at least one or more of a temperature of the tread portion of the non-pneumatic tire, a number of rotations of the non-pneumatic tire, an acceleration at the non-pneumatic tire, a frequency of occurrence of an acceleration exceeding a predetermined numerical value in the non-pneumatic tire, a wear amount of the tread portion of the non-pneumatic tire, a travel speed of the vehicle, an acceleration of the vehicle, a steering angle of the vehicle, a number of times of braking, an operation amount of braking, a travel route of the vehicle, a travel distance of the vehicle, a state of a travel road surface, a weather during traveling of the vehicle, an air temperature during traveling of the vehicle, a load applied to the non-pneumatic tire during traveling of the vehicle, a vibration value that occurs in the non-pneumatic tire during traveling of the vehicle, and a number of replacements of the tread portion in the non-pneumatic tire.

In a case where the tire-related information includes the above-described plurality of pieces of information, the accuracy of determination by the reusability determination portion is improved.

Disclosure item (3) is the tire state determination system according to the disclosure item (2), wherein the acquisition portion acquires a degree of uneven wear of the non-pneumatic tire. In this case, the reusability determination portion performs the determination process on the base body portion based on the uneven wear.

As described above, since the reusability of the base body portion is determined by taking into consideration the degree of the uneven wear, the accuracy of determination by the reusability determination portion is further improved.

Disclosure item (4) is the tire state determination system according to the disclosure item (2) or (3), wherein the acquisition portion acquires the travel distance for each type of the travel route. In this case, the reusability determination portion performs the determination process on the base body portion based on the travel distance for each type of the travel route.

As described above, since the state of the base body portion is determined by taking into consideration the travel distance for each type of the travel route, the accuracy of determination by the reusability determination portion is further improved.

Disclosure item (5) is the tire state determination system according to any one of the disclosure items (1) to (4), wherein the reusability determination portion calculates, based on the tire-related information, an evaluation value indicating a state of the base body portion, determines that the base body portion is reusable when the evaluation value is equal to or higher than a predetermined threshold, and determines that the base body portion is not reusable when the evaluation value is lower than the threshold.

Disclosure item (6) is the tire state determination system according to the disclosure item (5), wherein the non-pneumatic tire includes a storage portion storing identification information of the non-pneumatic tire. In this case, the acquisition portion acquires the tire-related information together with the identification information. In addition, the reusability determination portion calculates the evaluation value of the non-pneumatic tire corresponding to the identification information.

Disclosure item (7) is the tire state determination system according to the disclosure item (6), further including a recording portion configured to perform a process to record the tire-related information onto a predetermined storage medium in association with the identification information.

With the above-described configuration, for example, even when the non-pneumatic tire is removed from the vehicle, is mounted on another vehicle as a used tire, and is used in succession, the tire-related information of the tire as mounted on the previous vehicle is retained. Accordingly, even when the present tire is used in the next vehicle, the tire-related information as used in the previous vehicle can be handed over.

Disclosure item (8) is the tire state determination system according to any one of the disclosure items (5) to (7), further including a value determination portion configured to, upon a determination by the reusability determination portion that the base body portion is reusable, perform a process to determine, based on the evaluation value, either or both of a value of the non-pneumatic tire and a value of the base body portion.

The value is, for example, a market value of the non-pneumatic tire for use as a retreaded tire or a market value of the base body portion thereof. The value is a buying price or a selling price, or an index corresponding to the price information. Since the value is determined in the above-described manner, for example, value information indicating the value may be presented to a concerned person (for example, an owner of the non-pneumatic tire or a sales intermediary of the non-pneumatic tire) so that the concerned person can easily grasp an objective utility value of the non-pneumatic tire.

Disclosure item (9) is the tire state determination system according to the disclosure item (8), wherein the value determination portion determines a durability level of the base body portion based on the evaluation value, and determines, based on the durability level, either or both of the value of the non-pneumatic tire and the value of the base body portion.

Here, the durability level is, for example, a predicted time period until the base body portion of the non-pneumatic tire becomes out of order and unable to be used. The durability level is a factor that relates largely to the life of a retreaded non-pneumatic tire.

Disclosure item (10) is the tire state determination system according to any one of the disclosure items (1) to (9), further including a tread structure determination portion configured to, upon a determination by the reusability determination portion that the base body portion is reusable, perform a process to determine a structure of the tread portion in reuse corresponding to the tire-related information.

With the above-described configuration, for example, the determination result of the tread structure determination portion may be output to a vehicle-mounted device installed in the vehicle, a terminal apparatus carried by the owner of the vehicle, or the like. In this case, when the tire mounted on the vehicle is to be retreaded, the owner of the vehicle can easily grasp a tread portion suitable for the tire-related information and easily select the tread portion suitable for the tire-related information.

Disclosure item (11) is the tire state determination system according to any one of the disclosure items (1) to (10), further including an output processing portion configured to perform a process to output determination information concerning a determination result of the reusability determination portion.

For example, the output processing portion outputs the determination information to a terminal apparatus or a display device in the tire state determination system, or to an external apparatus or an external system that are connected to the tire state determination system by a communication network.

Disclosure item (12) according to another aspect of the present disclosure is a tire state determination apparatus configured to determine a state of a non-pneumatic tire that is used for travelling of a vehicle. The tire state determination apparatus includes: an acquisition portion configured to acquire tire-related information that may exert influence on deterioration of a base body portion that is a part of the non-pneumatic tire excluding a tread portion; and a reusability determination portion configured to perform a determination process to determine, based on the tire-related information, whether or not the base body portion is reusable.

Disclosure item (13) according to a further aspect of the present disclosure is a tire state determination method for determining a state of a non-pneumatic tire that is used for travelling of a vehicle. The tire state determination method includes: an acquisition step of acquiring tire-related information that may exert influence on deterioration of a base body portion that is a part of the non-pneumatic tire excluding a tread portion; and a determination step of performing a determination process to determine, based on the tire-related information, whether or not the base body portion is reusable.

Disclosure item (14) according to a still further aspect of the present disclosure is a program for determining a state of a non-pneumatic tire that is used for travelling of a vehicle, and is a program for causing one or more processors or computers to execute each step of the tire state determination method. The present disclosure may be a computer-readable recording medium in which the program has been recorded in a non-transitory manner. The program is a program for causing one or more processors or computers to execute: an acquisition step of acquiring tire-related information that may exert influence on deterioration of a base body portion that is a part of the non-pneumatic tire excluding a tread portion; and a determination step of performing a determination process to determine, based on the tire-related information, whether or not the base body portion is reusable. The present disclosure may be a computer-readable recording medium in which the program has been recorded in a non-transitory manner.

**Claims**

1. A tire state determination system for determining a state of a non-pneumatic tire that is used for travelling of a vehicle, the tire state determination system comprising:

   an acquisition portion configured to acquire tire-related information that may exert influence on deterioration of a base body portion that is a part of the non-pneumatic tire excluding a tread portion; and
   a reusability determination portion configured to perform a determination process to determine, based on the tire-related information, whether or not the base body portion is reusable.

2. The tire state determination system according to claim 1, wherein
   the tire-related information is at least one or more of a temperature of the tread portion of the non-pneumatic tire, a number of rotations of the non-pneumatic tire, an acceleration at the non-pneumatic tire, a frequency of occurrence of an acceleration exceeding a predetermined numerical value in the non-pneumatic tire, a wear amount of the tread portion of the non-pneumatic tire, a travel speed of the vehicle, an acceleration of the vehicle, a steering angle of the vehicle, a number of times of braking, an operation amount of braking, a travel route of the vehicle, a travel distance of the vehicle, a state of a travel road surface, a weather during traveling of the vehicle, an air temperature during traveling of the vehicle, a load applied to the non-pneumatic tire during traveling of the vehicle, a vibration value that occurs in the non-pneumatic tire during traveling of the vehicle, and a number of replacements of the tread portion.

3. The tire state determination system according to claim 2, wherein

   the acquisition portion acquires a degree of uneven wear of the non-pneumatic tire, and
   the reusability determination portion performs the determination process on the base body portion based on the uneven wear.

4. The tire state determination system according to claim 2 or 3, wherein

   the acquisition portion acquires the travel distance for each type of the travel route, and
   the reusability determination portion performs the determination process on the base body portion based on the travel distance for each type of the travel route.

5. The tire state determination system according to any one of claims 1 to 4, wherein

   the reusability determination portion calculates, based on the tire-related information, an evaluation value indicating a state of the base body portion,
   determines that the base body portion is reusable when the evaluation value is equal to or higher than a predetermined threshold, and determines that the base body portion is not reusable when the evaluation value is lower than the threshold.

6. The tire state determination system according to claim 5, wherein

the non-pneumatic tire includes a storage portion storing identification information of the non-pneumatic tire, the acquisition portion acquires the tire-related information together with the identification information, and the reusability determination portion calculates the evaluation value of the non-pneumatic tire corresponding to the identification information.

7. The tire state determination system according to claim 6, further comprising a recording portion configured to perform a process to record the tire-related information onto a predetermined storage medium in association with the identification information.

8. The tire state determination system according to any one of claims 5 to 7, further comprising a value determination portion configured to, upon a determination by the reusability determination portion that the base body portion is reusable, perform a process to determine, based on the evaluation value, either or both of a value of the non-pneumatic tire and a value of the base body portion.

9. The tire state determination system according to claim 8, wherein
the value determination portion determines a durability level of the base body portion based on the evaluation value, and determines, based on the durability level, either or both of the value of the non-pneumatic tire and the value of the base body portion.

10. The tire state determination system according to any one of claims 1 to 9, further comprising a tread structure determination portion configured to, upon a determination by the reusability determination portion that the base body portion is reusable, perform a process to determine a structure of the tread portion in reuse corresponding to the tire-related information.

11. The tire state determination system according to any one of claims 1 to 10, further comprising an output processing portion configured to perform a process to output determination information concerning a determination result of the reusability determination portion.

12. A tire state determination apparatus for determining a state of a non-pneumatic tire that is used for travelling of a vehicle, the tire state determination apparatus comprising:

an acquisition portion configured to acquire tire-related information that may exert influence on deterioration of a base body portion that is a part of the non-pneumatic tire excluding a tread portion; and a reusability determination portion configured to perform a determination process to determine, based on the tire-related information, whether or not the base body portion is reusable.

13. A tire state determination method for determining a state of a non-pneumatic tire that is used for travelling of a vehicle, the tire state determination method comprising:

an acquisition step of acquiring tire-related information that may exert influence on deterioration of a base body portion that is a part of the non-pneumatic tire excluding a tread portion; and a determination step of performing a determination process to determine, based on the tire-related information, whether or not the base body portion is reusable.

14. A program for determining a state of a non-pneumatic tire that is used for travelling of a vehicle, the program causing one or more processors to execute:

an acquisition step of acquiring tire-related information that may exert influence on deterioration of a base body portion that is a part of the non-pneumatic tire excluding a tread portion; and a determination step of performing a determination process to determine, based on the tire-related information, whether or not the base body portion is reusable.

FIG.1

## FIG.2

FIG.3

FIG.4

FIG.5

CONTROL UNIT `60`

CONTROL PORTION `61`

611 — CONVERSION PROCESSING PORTION

612 — DISPLAY PROCESSING PORTION

STORAGE PORTION `62`

COMMUNICATION PORTION `63`

GPS RECEIVING PORTION `64`

OUTPUT PORTION `65`

INPUT PORTION `66`

`50`

51 — WHEEL SPEED SENSOR

52 — LATERAL ACCELERATION SENSOR

53 — VIBRATION SENSOR

54 — TEMPERATURE SENSOR

55 — THICKNESS SENSOR

67 — MEMORY

STEERING ANGLE SENSOR — 56

BRAKE SENSOR — 57

TREAD SURFACE SENSOR — 58

OPERATION SWITCH — 59

1

FIG.6

STATE DETERMINATION APPARATUS — 10

CONTROL PORTION — 11

STATE DATA ACQUISITION PORTION — 111

RECORDING PROCESSING PORTION — 112

APPLICABILITY DETERMINATION PORTION — 114

VALUE DETERMINATION PORTION — 116

TREAD SHAPE DETERMINATION PORTION — 117

OUTPUT PROCESSING PORTION — 115

STORAGE PORTION — 12

COMMUNICATION PORTION — 13

DISPLAY PORTION — 14

OPERATION PORTION — 15

COMMUNICATION APPARATUS — 40

INFORMATION TERMINAL — 20

STATE DATA STORAGE PORTION — 31 / 30

## FIG.7

START

S101 — DETERMINATION REQUEST? — No (loop) / Yes

S102 — COMMUNICATION ESTABLISHED? — No (loop) / Yes

S103 — TRANSMIT DATA ACQUISITION REQUEST

S104 — STATE DATA ACQUIRED? — No (loop) / Yes

S105 — CALCULATE EVALUATION VALUE

S106 — REUSABLE? — No → S109 / Yes

S107 — DETERMINE VALUE OF TIRE

S1071 — DETERMINE TREAD STRUCTURE

S109 — OUTPUT INAPPLICABLE INFORMATION AND EVALUATION VALUE

S108 — OUTPUT PROCESS

S110 — TRANSFER REQUEST? — No / Yes

S111 — TRANSMIT DETERMINATION RESULT AND EVALUATION VALUE TO REQUEST SOURCE

END

7 / 8

FIG.8

## INTERNATIONAL SEARCH REPORT

| International application No. |
| --- |
| **PCT/JP2022/028169** |

**A.    CLASSIFICATION OF SUBJECT MATTER**

***B60C 19/00***(2006.01)i
FI:    B60C19/00 B; B60C19/00 Z

According to International Patent Classification (IPC) or to both national classification and IPC

**B.    FIELDS SEARCHED**

Minimum documentation searched (classification system followed by classification symbols)

B60C19/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2010-504247 A (SOCIETE DE TECHNOLOGIE MICHELIN) 12 February 2010 (2010-02-12) | 1, 2, 4, 11-14 |
|   | claims, paragraphs [0011]-[0052] | |
| Y | claims, paragraphs [0011]-[0052] | 3, 5-7, 10 |
| A | claims, paragraphs [0011]-[0052] | 8, 9 |
| Y | JP 2008-247126 A (SUMITOMO RUBBER INDUSTRIES, LTD.) 16 October 2008 (2008-10-16) | 3 |
|   | claims, paragraphs [0011]-[0046] | |
| Y | JP 2019-69670 A (TOYO TIRE CORP.) 09 May 2019 (2019-05-09) | 5-7 |
|   | paragraphs [0028]-[0058], fig. 5, 6 | |
| Y | JP 2018-156124 A (BRIDGESTONE CORP.) 04 October 2018 (2018-10-04) | 10 |
|   | claims, paragraphs [0088]-[0097], fig. 8, 14 | |
| A | JP 2020-34275 A (BRIDGESTONE CORP.) 05 March 2020 (2020-03-05) | 1-14 |
|   | entire text | |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 September 2022** | **04 October 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

International application No.

**PCT/JP2022/028169**

### C. DOCUMENTS CONSIDERED TO BE RELEVANT

| Category* | Citation of document, with indication, where appropriate, of the relevant passages | Relevant to claim No. |
|---|---|---|
| A | JP 2016-223857 A (THE YOKOHAMA RUBBER CO., LTD.) 28 December 2016 (2016-12-28)<br>entire text | 1-14 |
| A | JP 2018-34608 A (THE YOKOHAMA RUBBER CO., LTD.) 08 March 2018 (2018-03-08)<br>entire text | 1-14 |

Form PCT/ISA/210 (second sheet) (January 2015)

**INTERNATIONAL SEARCH REPORT**
**Information on patent family members**

International application No.

**PCT/JP2022/028169**

| Patent document cited in search report | | | Publication date (day/month/year) | Patent family member(s) | Publication date (day/month/year) |
|---|---|---|---|---|---|
| JP | 2010-504247 | A | 12 February 2010 | US 2010/0147061 A1 claims, paragraphs [0011]-[0052] CN 101505978 A whole document TW 200821185 A whole document | |
| JP | 2008-247126 | A | 16 October 2008 | (Family: none) | |
| JP | 2019-69670 | A | 09 May 2019 | (Family: none) | |
| JP | 2018-156124 | A | 04 October 2018 | US 2020/0148010 A1 paragraphs [0103]-[0112], fig. 8, 14, claims WO 2018/168540 A1 paragraphs [0087]-[0096], fig. 8, 14 CN 110402448 A whole document | |
| JP | 2020-34275 | A | 05 March 2020 | WO 2020/045035 A1 entire text | |
| JP | 2016-223857 | A | 28 December 2016 | (Family: none) | |
| JP | 2018-34608 | A | 08 March 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2015217717 A